(19) Europäisches Patentamt
European Patent Office
Office européen des brevets

(11) **EP 3 269 943 B1**

(12) **EUROPÄISCHE PATENTSCHRIFT**

(45) Veröffentlichungstag und Bekanntmachung des Hinweises auf die Patenterteilung:
**21.11.2018   Patentblatt 2018/47**

(51) Int Cl.:
***F01D 21/04*** *(2006.01)*

(21) Anmeldenummer: **17179252.6**

(22) Anmeldetag: **03.07.2017**

(54) **GASTURBINE UND VERFAHREN ZUM SCHUTZ EINER GASTURBINE BEI WELLENBRUCH**

GAS TURBINE AND METHOD FOR PROTECTING A GAS TURBINE IN CASE OF A SHAFT BREAK

TURBINE À GAZ ET PROCÉDÉ DE PROTECTION D'UNE TURBINE À GAZ EN CAS DE RUPTURE D'ARBRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.07.2016   DE 102016113030**

(43) Veröffentlichungstag der Anmeldung:
**17.01.2018   Patentblatt 2018/03**

(73) Patentinhaber: **Rolls-Royce Deutschland Ltd & Co KG**
**15827 Blankenfelde-Mahlow (DE)**

(72) Erfinder:
• **PANZNER, Martin**
**15711 Königs Wusterhausen (DE)**
• **SIELAFF, Enrique**
**12169 Berlin (DE)**

(74) Vertreter: **Müller, Wolfram Hubertus**
**Patentanwalt**
**Teltower Damm 15**
**14169 Berlin (DE)**

(56) Entgegenhaltungen:
**GB-A- 2 111 639**

**Beschreibung**

Die Erfindung betrifft eine Gasturbine gemäß dem Oberbegriff des Patentanspruchs 1 und ein Verfahren zum Schutz einer Gasturbine bei Wellenbruch.

Eine Gasturbine umfasst einen Verdichter, eine Brennkammer und eine Turbine. Je nach Art der Gasturbine können dabei mehrere Verdichter und Turbinen vorgesehen sein, beispielsweise ein Niederdruckverdichter und ein Hochdruckverdichter sowie eine Niederdruckturbine und eine Hochdruckturbine. Die Turbine wird durch Verbrennungsgase der Brennkammer angetrieben und treibt ihrerseits über eine Welle den Verdichter an. Beispielsweise treibt eine Niederdruckturbine über eine Niederdruckwelle (auch als N1-Welle bezeichnet) einen Niederdruckverdichter und eine Hochdruckturbine über eine Hochdruckwelle (auch als N2-Welle bezeichnet) einen Hochdruckverdichter an.

Im Falle eines Wellenbruchs in einer Gasturbine wird die Turbine schlagartig vom Verdichter getrennt und nicht mehr durch diesen gebremst. Gleichzeitig fördert der Verdichter noch eine gewisse Zeit Massenstrom, der die Turbine beschleunigt. Bei Wellenbruch besteht daher die Gefahr, dass die nun frei laufende Turbine über ihre maximal zulässige Drehzahl beschleunigt wird und es zu einem Scheibenbruch kommt. Diese Gefahr besteht insbesondere bei Hochdruckturbinen, die typischerweise ohne konstruktiven Schutz vor Überdrehzahl gebaut werden. Vielmehr wird die maximale Überdrehzahl thermodynamisch berechnet und erfolgt danach eine Auslegung der Turbinenscheiben, wobei typischerweise angenommen wird, dass die maximale Überdrehzahl bei 125 % der maximalen regulären Drehzahl liegt.

Die GB 2 111 639 A beschreibt eine Wellenanordnung für eine Gasturbine, die eine Zusatzwelle umfasst, die im Falle eines Wellenbruchs ein mit der Turbine verbundenes Wellenstück der gebrochenen Welle über Verzahnungen in axialer Richtung stromabwärts bewegt, um die Turbine in feststehende Strukturen zu drücken und hierdurch die Turbinenscheiben in kleine Stücke zu zerbrechen, bevor sie insgesamt abfallen.

Aus der GB 2 377 731 A ist eine Wellenanordnung für eine Gasturbine bekannt, die eine mit dem Fan verbundene Zusatzwelle aufweist. Im Falle eines Bruchs der den Fan antreibenden Niederdruckwelle in einem Abschnitt, der an den Fan angrenzt, koppelt die Zusatzwelle mit einem Abschnitt der Niederdruckwelle, der mit der Niederdruckturbine verbunden ist. Hierdurch soll ein Bruch auch dieses Abschnitts der Niederdruckwelle erreicht werden, so dass sich die Niederdruckwelle axial verschieben kann.

Der vorliegenden Erfindung liegt die Aufgabe zu Grunde, eine Gasturbine und ein Verfahren zum Schutz einer Gasturbine bei Wellenbruch bereitzustellen, die einen solchen Schutz in effektiver Weise bereitstellen.

Diese Aufgabe wird erfindungsgemäß durch eine Gasturbine mit den Merkmalen des Anspruchs 1 und ein Verfahren mit den Merkmalen des Anspruchs 11 gelöst. Ausgestaltungen der Erfindung sind in den Unteransprüchen angegeben.

Danach sieht die vorliegende Erfindung vor, eine Zusatzwelle bereitzustellen, die koaxial zur Hauptwelle verläuft. Die Zusatzwelle weist einen ersten Wellenabschnitt und einen zweiten Wellenabschnitt auf, die durch einen Spalt voneinander getrennt sind und somit im Betrieb der Hauptwelle nicht in Wirkverbindung miteinander stehen. Der erste Wellenabschnitt ist mit dem Verdichter und der zweite Wellenabschnitt ist mit der Turbine verbunden. Weiter ist vorgesehen, dass die beiden Wellenabschnitte an ihren einander zugewandten Enden miteinander korrespondierende Strukturen aufweisen.

Bei Bruch der Hauptquelle entsteht die Situation, dass die beiden Wellenabschnitte eine unterschiedliche Drehgeschwindigkeit entwickeln. So wird die Drehgeschwindigkeit des ersten Wellenabschnittes durch die Drehgeschwindigkeit des Verdichters und die Drehgeschwindigkeit des zweiten Wellenabschnittes durch die Drehgeschwindigkeit der Turbine bestimmt, da der erste Wellenabschnitt mit dem Verdichter und der zweite Wellenabschnitt mit der Turbine verbunden sind. Wenn nach Bruch der Hauptwelle die Turbine schlagartig vom Verdichter getrennt wird, entwickeln sich diese beiden Drehgeschwindigkeiten auseinander.

Dies bedeutet, dass die einander zugewandten Enden der beiden Wellenabschnitte anfangen, sich mit unterschiedlicher Geschwindigkeit zu drehen. Hierbei geraten die miteinander korrespondierenden Strukturen der einander zugewandten Enden der beiden Wellenabschnitte in Anlage bzw. in Interaktion. Die miteinander korrespondierenden Strukturen sind dabei derart ausgebildet, dass die beiden Wellenabschnitte bei einem solchen relativen Verdrehen der beiden Wellenabschnitte voneinander weg bewegt werden. Dabei verhält es sich so, dass die Wellenabschnitte sich nur in axialer Richtung bewegen können (da sie koaxial innerhalb der Hauptwelle angeordnet sind). Somit werden die beiden Wellenabschnitte aufgrund der auftretenden Interaktion schlagartig voneinander weg bewegt. Dabei erfährt der erste Wellenabschnitt eine Kraft entgegen der axialen Richtung und der zweite Wellenabschnitt eine Kraft in axialer Richtung.

Da der erste Wellenabschnitt mit dem Verdichter verbunden ist, wird die auf den ersten Wellenabschnitt wirkende Kraft vom ersten Wellenabschnitt auf den Verdichter übertragen. In gleicher Weise gilt, dass die auf den zweiten Wellenabschnitt wirkende Kraft vom zweiten Wellenabschnitt auf die Turbine übertragen wird. Hierdurch werden Verdichter und Turbine gezielt in ihre jeweiligen Statoren oder andere feststehende Strukturen gedrückt. Hierdurch wird die jeweilige Reibung erhöht, welche der Beschleunigung der Turbine entgegenwirkt und den Verdichter schneller abbremst.

Die vorliegende Erfindung ermöglicht somit ein Abbremsen der Rotationsbewegung von Turbine und Verdichter im Falle eines Wellenbruchs. Infolge dessen können die Turbinenscheiben für eine niedrigere maximale Drehzahl ausgelegt werden. Hierdurch können Gewicht und Kosten gespart werden. Dünnere Turbinenscheiben haben des Weiteren den positiven Effekt, dass eine bessere thermische Ausdehnung zu geringeren Spitzenspalten während transienter Manöver führt. Dies resultiert in besseren Wirkungsgraden und geringeren Temperaturspitzen, was positiv für die Lebensdauer der Turbinenscheiben ist.

Weiter wird darauf hingewiesen, dass die durch die Erfindung bereitgestellte Axialverschiebung von Verdichter und Turbine in kurzer Zeit bereitgestellt wird, nämlich innerhalb maximal einer halben relativen Umdrehung der beiden Wellenabschnitte. Material und Dicke der Zusatzwelle bzw. der beiden Wellenabschnitte sind derart ausgelegt, dass sie einer solchen Belastung standhalten.

Es wird zur verwendeten Terminologie darauf hingewiesen, dass eine Verbindung des ersten Wellenabschnitts mit dem Verdichter dahingehend zu verstehen ist, dass der erste Wellenabschnitt mit einem rotierenden Bestandteil des Verdichters, beispielsweise einer Verdichterscheibe verbunden ist (beispielsweise über einen Flansch). Ebenso ist eine Verbindung des zweiten Wellenabschnitts mit der Turbine dahingehend zu verstehen, dass der zweite Wellenabschnitt mit einem rotierenden Bestandteil der Turbine verbunden ist. Diese Verbindung kann auch in der Weise erfolgen, dass der erste Wellenabschnitt und/oder der zweite Wellenabschnitt mit der Hauptwelle gekoppelt sind, die dann wiederum mit Turbine und Verdichter verbunden ist. In gleicher Weise ist die Formulierung, dass ein Wellenabschnitt eine Kraft auf den Verdichter oder die Turbine überträgt, dahingehend zu verstehen, dass eine Kraft auf einen rotierenden Bestandteil des Verdichters bzw. der Turbine übertragen wird.

Eine Ausgestaltung der Erfindung sieht vor, dass die beiden Wellenabschnitte an ihren einander zugewandten Enden jeweils schräg abgeschnitten, d.h. angeschrägt sind. Sie sind dabei derart ausgerichtet, dass die einander zugewandten Enden im Betrieb der Hauptwelle parallel zueinander ausgerichtet sind, d.h. in parallelen Ebenen liegen. Die erfindungsgemäß bereitgestellten miteinander korrespondierenden Strukturen werden gemäß dieser Ausgestaltung somit durch die Stirnflächen von zwei an einem Ende schräg abgeschnittenen Zylindern bzw. Hohlzylindern gebildet. Die Stirnflächen korrespondieren in ihrer Struktur dabei insofern miteinander, als sie bei paralleler Ausrichtung sich zu einer zylindrischen bzw. hohlzylindrischen Form ergänzen. Nach Bruch der Hauptwelle und einem dadurch ausgelösten relativen Verdrehen der beiden Wellenabschnitte rollen sich die beiden Stirnseiten der angeschrägten Enden ab, wobei die beiden Wellenabschnitte voneinander weg bewegt werden.

Eine weitere Ausgestaltung der Erfindung sieht vor, dass die beiden Wellenabschnitte an ihren einander zugewandten Enden jeweils wellenförmig ausgebildet sind. Die erfindungsgemäß bereitgestellten miteinander korrespondierenden Strukturen werden gemäß dieser Ausgestaltung somit jeweils durch wellenförmige Stirnflächen bereitgestellt. Die Stirnflächen korrespondieren in ihrer Struktur dabei insofern miteinander, als sie beide wellenförmig ausgebildet sind, wobei Periode und Amplitude in einer Ausführungsvariante übereinstimmen. Im Betrieb der Hauptwelle liegen Wellental und Wellenberg einander gegenüber. Nach Bruch der Hauptwelle und einem dadurch ausgelösten relativen Verdrehen der beiden Wellenabschnitte werden die Stirnflächen um den Betrag eines Wellenbergs relativ zueinander verdreht, so dass nun Wellenberg und Wellenberg aneinander zu liegen kommen, was zu einer Axialverschiebung führt.

Die Wellenform kann z.B. durch eine Sinusschwingung oder eine Überlagerung von Sinusschwingungen gebildet sein. Die Periode der Wellenform ist beispielsweise derart gewählt, dass die jeweilige Stirnseite eines Wellenabschnitts 1 bis 5, insbesondere 1 oder 2 Schwingungen ausbildet, wobei jede Schwingung einen Wellenbauch und ein Wellental umfasst. Im Falle der Ausbildung als Sinusschwingung werden somit beispielsweise 1 bis 5, insbesondere 1 oder 2 Sinusschwingungen an den Stirnseiten ausgebildet.

Sofern die beiden Wellenabschnitte an ihren einander zugewandten Enden jeweils schräg abgeschnitten sind, sieht eine Ausgestaltung der Erfindung sieht vor, dass der Winkel $\alpha$, der die Schrägstellung des jeweils schräg abgeschnittenen Wellenabschnittsendes gegenüber der axialen Richtung definiert, zwischen 10° und 80°, insbesondere 30° und 60° liegt. Grundsätzlich kann jedoch auch ein anderer Winkel vorgesehen sein. Als Winkel $\alpha$ wird dabei der kleinere Winkel bezeichnet, der sich an den parallel verlaufenden Stirnseiten der beiden Wellenabschnitte einstellt.

Nach Bruch der Hauptwelle werden die beiden Wellenabschnitte um die Strecke

$$d = c \cdot \cos(\alpha)$$

gegeneinander verschoben, wenn $\alpha$ der Winkel ist, der die Schrägstellung des jeweils schräg abgeschnittenen Wellenabschnittsendes gegenüber der axialen Richtung definiert, und c die Länge der Hypotenuse des abgeschnittenen Wellenabschnitts in Seitenansicht ist. Daraus ergibt sich unmittelbar, dass die beiden Wellenabschnitte desto stärker in axialer Richtung bzw. entgegen der axialen Richtung voneinander weg bewegt werden, je kleiner der Winkel $\alpha$ ist. Dementsprechend ist bei kleineren Winkeln von $\alpha$ auch die Bremswirkung größer, die die beiden Wellenabschnitte auf Turbine und Verdichter ausüben. In jedem Fall stellt die Erfindung eine definierte Axialverschiebung der Wellenabschnitte und damit von Turbine und Verdichter bereit.

Eine weitere Ausgestaltung der Erfindung sieht vor, dass der eine Wellenabschnitt an seinem Ende einen Führungszapfen ausbildet, der in den anderen Wellenabschnitt hineinragt. Hierdurch wird eine axiale Führung der beiden Wellenabschnitte sichergestellt, wenn diese sich voneinander weg bewegen. Zudem wird die Stabilität des Systems erhöht.

Die Zusatzwelle ist in der Regel als Hohlwelle und die beiden Wellenabschnitte der Zusatzwelle somit in der Regel als Hohlzylinder ausgebildet. Die Zusatzwelle bzw. deren beiden Wellenabschnitte sind notwendigerweise immer dann als Hohlwelle ausgebildet, wenn innerhalb der Hauptwelle eine oder mehrere weitere Wellen verlaufen. Dies ist nur dann nicht der Fall, wenn die Hauptwelle die Niederdruckwelle der Gasturbine ist oder wenn die Gasturbine nur eine Welle aufweist. In einer Ausgestaltung sind die beiden Wellenabschnitte durch an einem Ende schräg abgeschnittene Hohlzylinder gebildet.

Bei einer als Hohlzylinder ausgebildeten Zusatzwelle sind die Stirnflächen der beiden Wellenabschnitte, die die einander korrespondierenden Strukturen ausbilden und die bei Bruch der Hauptwelle aufgrund der dann einsetzenden unterschiedlichen Drehgeschwindigkeit der beiden Wellenabschnitte miteinander in Interaktion treten, ringförmig.

Die ringförmigen Stirnflächen der beiden Wellenabschnitte, die im Betrieb der Hauptwelle durch einen Spalt voneinander getrennt sind und die bei Bruch der Hauptwelle in Interaktion treten, verlaufen dabei gemäß einer Ausgestaltung parallel zueinander. Sofern die beiden Wellenabschnitte an ihren einander zugewandten Enden jeweils schräg abgeschnitten sind, sind sie beispielsweise in gleicher Weise angeschrägt wie die einander zugewandten Enden der Wellenabschnitte insgesamt angeschrägt sind. Dies ist aber nicht notwendigerweise der Fall. Bei Interaktion der ringförmigen Stirnflächen werden die beiden Wellenabschnitte sicher und ohne Auftreten von Brüchen voneinander weg bewegt. Die radiale Erstreckung der Stirnflächen ist dabei durch die Wanddicke der hohlzylindrischen Wellenabschnitte bestimmt.

Die vorliegende Erfindung ist grundsätzlich bei beliebigen Hauptwellen einsetzbar. So kann bei einem Triebwerk mit zwei Wellen die erfindungsgemäß ausgebildete Hauptwelle die Hochdruckwelle oder die Niederdruckwelle sein. Bei einem Triebwerk mit drei Wellen kann die erfindungsgemäß ausgebildete Hauptwelle die Hochdruckwelle, die Mitteldruckwelle oder die Niederdruckwelle sein. Gleichwohl sieht eine vorteilhafte Ausgestaltung der Erfindung vor, dass die Hauptwelle eine Hochdruckwelle ist, die eine Hochdruckturbine mit einem Hochdruckverdichter koppelt. Denn Hochdruckwellen und die dazugehörigen Turbinen werden bisher ohne einen konstruktiven Schutz vor Überdrehzahl gebaut.

Die Erfindung betrifft des Weiteren auch ein Verfahren zum Schutz einer Gasturbine bei Wellenbruch. Es ist vorgesehen, dass bei Bruch der Hauptwelle mittels einer Zusatzwelle, die koaxial zur Hauptwelle verläuft, eine Kraft in axialer Richtung in die Turbine und eine Kraft entgegen der axialen Richtung in den Verdichter eingeleitet wird. Dabei weist die Zusatzwelle einen ersten, mit dem Verdichter verbundenen Wellenabschnitt und einen zweiten, mit der Turbine verbundenen Abschnitt auf, die durch einen Spalt voneinander getrennt sind. Die beiden Wellenabschnitte weisen an ihren einander zugewandten Enden miteinander korrespondierende Strukturen auf. Die miteinander korrespondierenden Strukturen der einander zugewandten Enden der beiden Wellenabschnitte treten bei Bruch der Hauptwelle aufgrund einer dann einsetzenden unterschiedlichen Drehgeschwindigkeit der beiden Wellenabschnitte in Interaktion miteinander und bewegen die beiden Wellenabschnitte dabei voneinander weg.

Gemäß einer Ausgestaltung des erfindungsgemäßen Verfahrens ist vorgesehen, dass bei Bruch der Hauptwelle der zweite Wellenabschnitt eine Kraft in axialer Richtung erfährt und diese Kraft auf die Turbine überträgt. Dabei kann vorgesehen sein, dass die Turbine aufgrund der durch den zweiten Wellenabschnitt übertragenen Kraft in Statoren oder andere nichtrotierende Strukturen gedrückt und hierdurch gebremst wird.

Gemäß einer Ausgestaltung des erfindungsgemäßen Verfahrens ist vorgesehen, dass bei Bruch der Hauptwelle der erste Wellenabschnitt eine Kraft entgegen der axialen Richtung erfährt und diese Kraft auf den Verdichter überträgt. Dabei kann vorgesehen sein, dass der Verdichter aufgrund der durch den ersten Wellenabschnitt übertragenen Kraft in Statoren oder andere nichtrotierende Strukturen gedrückt und hierdurch gebremst wird.

Eine Ausgestaltung des erfindungsgemäßen Verfahrens sieht vor, dass die beiden Wellenabschnitte an ihren einander zugewandten Enden jeweils schräg abgeschnitten sind und bei einer relativen Verdrehung um 180° in axialer Richtung voneinander weg bewegt werden. Dabei kann vorgesehen sein, dass die beiden Wellenabschnitte nach Bruch der Hauptwelle um die Strecke $c \cdot \cos(\alpha)$ gegeneinander verschoben werden, wobei $\alpha$ der Winkel ist, der die Schrägstellung des jeweils schräg abgeschnittenen Wellenabschnittsendes gegenüber der axialen Richtung definiert, und c die Länge der Hypotenuse des abgeschnittenen Wellenabschnittsendes in Seitenansicht ist.

Eine weitere Ausgestaltung des erfindungsgemäßen Verfahrens sieht vor, dass die beiden Wellenabschnitte an ihren einander zugewandten Enden jeweils wellenförmig ausgebildet sind bei einer relativen Verdrehung um einen Wellenberg in axialer Richtung voneinander weg bewegt werden.

Die Erfindung wird nachfolgend unter Bezugnahme auf die Figuren der Zeichnung anhand mehrerer Ausführungsbeispiele näher erläutert. Es zeigen:

Figur 1 eine vereinfachte schematische Schnittdarstellung eines Turbofantriebwerks, in dem die vorliegende Erfindung realisierbar ist;

Figur 2     schematisch eine Wellenanordnung mit einer Hochdruckwelle und einer Zusatzwelle, wobei die Hochdruckwelle eine Hochdruckturbine mit einem Hochdruckverdichter koppelt, und wobei die Zusatzwelle dazu vorgesehen und ausgebildet ist, im Falle eines Bruchs der Hochdruckwelle die Hochdruckturbine und den Hochdruckverdichter jeweils axial zu verschieben;

Figur 3     in Seitenansicht ein Ausführungsbeispiel einer Zusatzwelle, die zwei Wellenabschnitte mit angeschrägten und einander zugewandten Enden aufweist, wobei die beiden Wellenabschnitte in der Figur 3 in einer ersten Position dargestellt sind, die im Normalbetrieb der Hochdruckwelle vorliegt;

Figur 4     die Zusatzwelle der Figur 3, wobei die beiden Wellenabschnitte in einer zweiten Position dargestellt sind, in die die Wellenabschnitte nach Bruch der Hochdruckwelle aufgrund dann unterschiedlicher Drehgeschwindigkeiten der beiden Wellenabschnitte geraten, und wobei als weiteres konstruktives Detail ein Führungszapfen dargestellt ist, der mit dem einen Wellenabschnitt verbunden ist und in den anderen Wellenabschnitt hineinragt;

Figur 5     eine teilweise geschnittene Ansicht der Zusatzwelle der Figuren 3 und 4, wobei der eine Wellenabschnitt und der in diesen ragende Führungszapfen in geschnittener Ansicht dargestellt ist;

Figur 6     in Seitenansicht ein weiteres Ausführungsbeispiel einer Zusatzwelle, die zwei Wellenabschnitte mit einander zugewandten Enden aufweist, wobei die Enden jeweils wellenförmig ausgebildet sind; und

Figur 7     den Verlauf der Drehzahl von Turbine und Verdichter im Falle eines Wellenbruches in Abhängigkeit von der Zeit, unter Darstellung der Drehzahlentwicklung gemäß dem Stand der Technik und bei Einsatz der vorliegenden Erfindung.

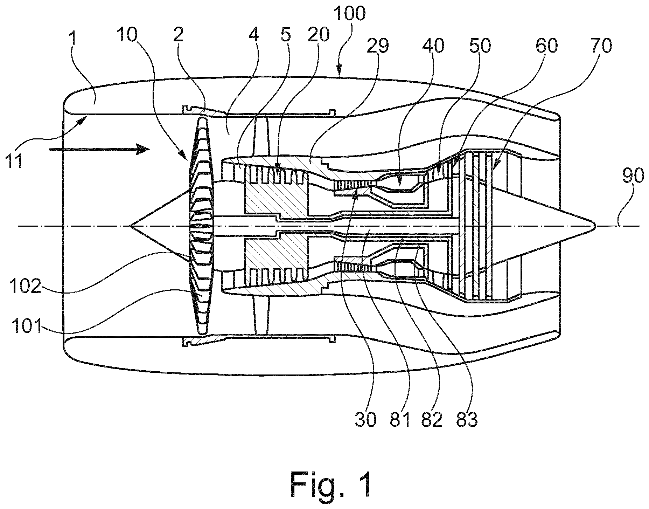

Die Figur 1 zeigt schematisch ein Turbofantriebwerk 100, das eine Fanstufe mit einem Fan 10 als Niederdruckverdichter, einen Mitteldruckverdichter 20, einen Hochdruckverdichter 30, eine Brennkammer 40, eine Hochdruckturbine 50, eine Mitteldruckturbine 60 und eine Niederdruckturbine 70 aufweist.

Der Mitteldruckverdichter 20 und der Hochdruckverdichter 30 weisen jeweils eine Mehrzahl von Verdichterstufen auf, die jeweils eine Rotorstufe und eine Statorstufe umfassen. Das Turbofantriebwerk 100 der Figur 1 weist des Weiteren drei separate Wellen auf, eine Niederdruckwelle 81, die die Niederdruckturbine 70 mit dem Fan 10 verbindet, eine Mitteldruckwelle 82, die die Mitteldruckturbine 60 mit dem Mitteldruckverdichter 20 verbindet und eine Hochdruckwelle 83, die die Hochdruckturbine 50 mit dem Hochdruckverdichter 30 verbindet. Dies ist jedoch lediglich beispielhaft zu verstehen. Wenn das Turbofantriebwerk beispielsweise keinen Mitteldruckverdichter und keine Mitteldruckturbine besitzt, wären nur eine Niederdruckwelle und eine Hochdruckwelle vorhanden.

Das Turbofantriebwerk 100 weist eine Triebwerksgondel 1 auf, die eingangsseitig einen Triebwerkseinlauf 11 ausbildet, der einströmende Luft dem Fan 10 zuführt. Der Fan 10 weist eine Mehrzahl von Fan-Schaufeln 101 auf, die mit einer Fan-Scheibe 102 verbunden sind. Der Annulus der Fan-Scheibe 102 bildet dabei die radial innere Begrenzung des Strömungspfads durch den Fan 10. Radial außen wird der Strömungspfad durch ein Fangehäuse 2 begrenzt. Stromaufwärts der Fan-Scheibe 102 ist ein Nasenkonus angeordnet.

Hinter dem Fan 10 bildet das Turbofantriebwerk 100 einen Sekundärstromkanal 4 und einen Primärstromkanal 5 aus. Der Primärstromkanal 5 führt durch das Kerntriebwerk (Gasturbine), das den Mitteldruckverdichter 20, den Hochdruckverdichter 30, die Brennkammer 40, die Hochdruckturbine 50, die Mitteldruckturbine 60 und die Niederdruckturbine 70 umfasst. Dabei sind der Mitteldruckverdichter 20 und der Hochdruckverdichter 30 von einem Umfangsgehäuse 29 umgeben, dass innenseitig eine Ringraumfläche bildet, die den Primärstromkanal 5 radial außen begrenzt. Radial innen ist der Primärstromkanal 5 durch entsprechende Kranzoberflächen der Rotoren und Statoren der jeweiligen Verdichterstufen bzw. durch die Nabe oder mit der Nabe verbundene Elemente der entsprechenden Antriebswelle begrenzt.

Im Betrieb des Turbofantriebwerks 100 durchströmt ein Primärstrom den Primärstromkanal 5. Der Sekundärstromkanal 4, auch als Nebenstromkanal, Mantelstromkanal oder Bypass-Kanal bezeichnet, leitet im Betrieb des Turbofantriebwerks 100 vom Fan 10 angesaugte Luft am Kerntriebwerk vorbei.

Die beschriebenen Komponenten besitzen eine gemeinsame Symmetrieachse 90. Die Symmetrieachse 90 definiert eine axiale Richtung des Turbofantriebwerks. Eine radiale Richtung des Turbofantriebwerks verläuft senkrecht zur axialen Richtung.

Im Kontext der vorliegenden Erfindung ist die Ausgestaltung der Wellen, die jeweils Turbine und Verdichter miteinander verbinden und koppeln, von besonderer Bedeutung. Die Erfindung wird dabei im Folgenden anhand der Hochdruckwelle beschrieben, die die Hochdruckturbine und den Hochdruckverbinder miteinander koppelt. Dies ist aber nur beispielhaft zu verstehen. Die Erfindung kann in entsprechender Weise in Bezug auf die Mitteldruckwelle oder in Bezug auf die Niederdruckwelle ausgebildet sein. Auch kann die Erfindung grundsätzlich auch bei einer einwelligen Gasturbine realisiert sein.

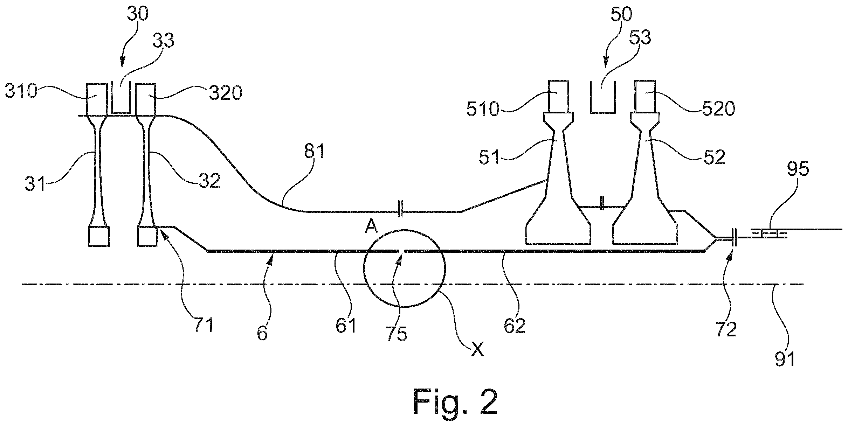

Die Figur 2 zeigt schematisch eine erfindungsgemäße Gasturbine, die beispielsweise in einem Flugtriebwerk ausgebildet ist und die eine Hauptwelle 81 und eine Zusatzwelle 6 aufweist. Die Hauptwelle 81 ist im dargestellten Ausführungsbeispiel eine Hochdruckwelle, die eine Hochdruckturbine 50 und einen Hochdruckverdichter 30 miteinander koppelt. Eine zwischen Hochdruckverdichter 30 und Hochdruckturbine 50 angeordnete Brennkammer ist nicht dargestellt.

Der Hochdruckverdichter 30 umfasst Verdichterscheiben 31, 32, die an ihren radial außen liegenden Enden Rotorschaufeln 310, 320 ausbilden. Die Verdichterscheiben 31, 32 mit den Rotorschaufeln 310, 320 stellen dabei rotierende Elemente des Hochdruckverdichters 30 dar. Die Hauptwelle 81 ist über nicht näher dargestellte Befestigungsmittel mit mindestens einer der Verdichterscheiben 31, 32 verbunden. Der Hochdruckverdichter 30 umfasst des Weiteren in an sich bekannter Weise Statorschaufeln 33, von denen eine schematisch und exemplarisch in der Figur 2 dargestellt ist.

Die Hochdruckturbine 50 umfasst Turbinenscheiben 51, 52, die an ihren radial außenliegenden Enden Rotorschaufeln 510, 520 ausbilden. Die Turbinenscheiben 51, 52 mit den Rotorschaufeln 510, 520 stellen rotierende Elemente der Hochdruckturbine 50 dar. Die Hauptwelle 81 ist über nicht näher dargestellte Befestigungsmittel mit mindestens einer der Turbinenscheiben 51, 52 verbunden. Die Hochdruckturbine 50 umfasst des Weiteren in an sich bekannter Weise Statorschaufeln 53, von denen eine schematisch und exemplarisch in der Figur 2 dargestellt ist.

Die Zusatzwelle 6 verläuft innerhalb der Hauptwelle 81 und dabei koaxial in Bezug auf die Drehachse 91 beider Wellen, die in der Regel identisch mit der Symmetrieachse 90 der Figur 1 ist. Die Zusatzwelle 6 umfasst einen ersten Wellenabschnitt 61 und einen zweiten Wellenabschnitt 62. Der erste Wellenabschnitt 61 ist mit dem Hochdruckverdichter 30 und der zweite Wellenabschnitt 62 ist mit der Hochdruckturbine 50 verbunden.

Die Art der jeweiligen Verbindung kann grundsätzlich beliebig sein. Beispielsweise ist der erste Wellenabschnitt 61 über eine nicht näher dargestellte Flanschverbindung 71 mit der einen Verdichterscheibe 32 verbunden. Weiter kann beispielsweise vorgesehen sein, dass der zweite Wellenabschnitt 62 in einem Verbindungsbereich 72 mit der Hauptwelle 81 gekoppelt ist, wodurch indirekt eine Verbindung mit den rotierenden Elementen 51, 52 der Hochdruckturbine 50 hergestellt ist. Die Verbindung des jeweiligen Wellenabschnittes 61, 62 mit dem Verdichter 30 bzw. der Turbine 50 kann somit direkt oder indirekt erfolgen.

Sowohl die Hauptwelle 81 als auch die Zusatzwelle 6 bzw. die beiden Wellenabschnitte 61, 62, die die Zusatzwelle 6 bilden, sind als Hohlwellen ausgebildet.

Die beiden Wellenabschnitte 61, 62 sind im nominalen Zustand, das heißt wenn die Hauptwelle 81 in Betrieb und nicht gebrochen ist, durch einen Spalt 75 voneinander getrennt, so dass im nominalen Zustand keine Wirkverbindung zwischen den beiden Wellenabschnitten 61, 62 vorliegt. Dementsprechend wird die Rotationsgeschwindigkeit des ersten Wellenabschnitts 61 durch die Rotationsgeschwindigkeit des Hochdruckverdichters 30 bzw. dessen rotierender Teile 31, 32 bestimmt. In entsprechender Weise wird die Rotationsgeschwindigkeit des zweiten Wellenabschnitts 62 durch die Rotationsgeschwindigkeit der Hochdruckturbine 50 bzw. deren rotierender Teile 51, 52 bestimmt. Da die Rotationsgeschwindigkeit von Hochdruckturbine 50 und Hochdruckverdichter 30 aufgrund der Verbindung über die Hauptwelle 81 im nominalen Zustand identisch ist, drehen im nominalen Zustand auch die beiden Wellenabschnitte 61, 62 mit gleicher Geschwindigkeit. Ihre relative Position zueinander ist daher im nominalen Zustand unverändert bzw. konstant.

Die Figur 2 zeigt des Weiteren schematisch ein Loslager 95 der Hauptwelle 81.

Es wird darauf hingewiesen, dass sich innerhalb der Zusatzwelle 6 weitere Wellen befinden können, die ebenfalls koaxial zur Drehachse 91 ausgebildet sind. Hierbei kann es sich beispielsweise um eine Niederdruckwelle bei einem zweiwelligen Triebwerk oder um eine Mitteldruckwelle und eine Niederdruckwelle bei einem dreiwelligen Triebwerk handeln.

Die Zusatzwelle 6 mit den beiden Wellenabschnitte 61, 62 ist dazu vorgesehen und ausgebildet, im Falle eines Bruchs der Hauptwelle 81 sowohl die Hochdruckturbine 50 als auch den Hochdruckverdichter 30 axial zu verschieben, und zwar in entgegengesetzter axialer Richtung. Dies wird anhand der Figuren 2 bis 5 im Folgenden näher erläutert werden.

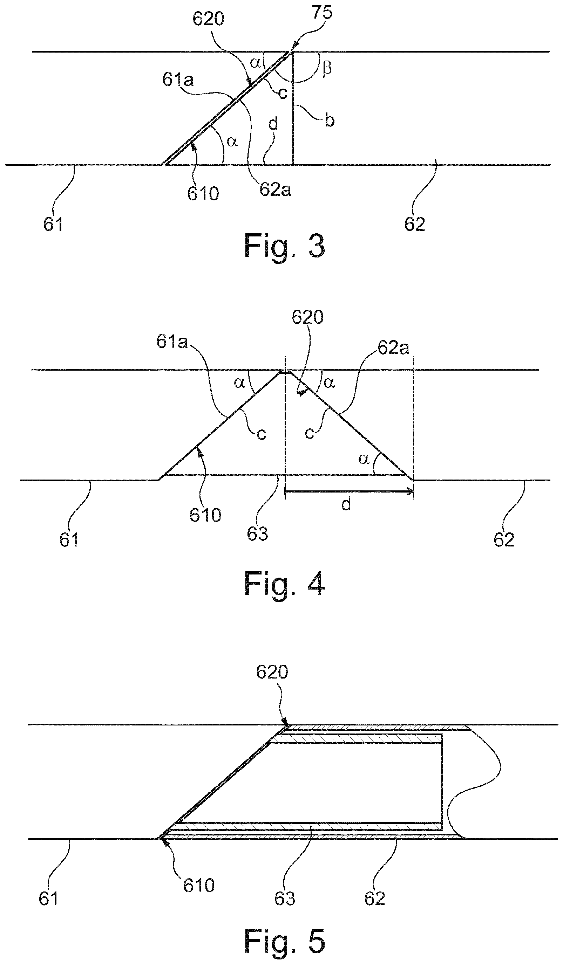

Die Figur 3 ist eine vergrößerte Darstellung der Zusatzwelle 6 in dem Bereich X der Figur 2, in dem die beiden Wellenabschnitte 61, 62 aneinander angrenzen und im nominalen Zustand zwischen sich einen Spalt 75 ausbilden. Dabei ist vorgesehen, dass die beiden Wellenabschnitte 61, 62 an ihren einander zugewandten Enden 61a, 62a jeweils schräg abgeschnitten, d.h. über ihren gesamten Durchmesser angeschrägt sind. Die Wellenabschnitte 61, 62 sind somit bei mathematischer Betrachtung als an einem Ende 61a, 62a schräg abgeschnittene Hohlzylinder ausgebildet. Hieraus folgt, dass die Stirnflächen 610, 620, die die Wellenabschnitte 61, 62 an ihren einander zugewandten Enden 61a, 62a ausbilden, jeweils eine Ringfläche bilden. Die Form der Ringfläche ist elliptisch, da, wenn man einen geraden Kreiszylinder an einem Ende mit einer Ebene schräg abschneidet, als Schnittkurve eine Ellipse entsteht. Die ringförmigen Stirnflächen 610, 620 besitzen daher die Form einer Ellipse.

Es ist weiter vorgesehen, dass die beiden Wellenabschnitte 61, 62 derart ausgerichtet sind, dass die einander zugewandten Enden 61a, 62a im nominalen Zustand, d.h. im Betrieb der Hauptwelle, parallel ausgerichtet sind. Mit anderen Worten liegen die Stirnflächen 610, 620, die die einander zugewandten Enden 61a, 62a ausbilden, in Ebenen, die parallel zueinander verlaufen. Die Stirnflächen 610, 620 sind dabei geringfügig beanstandet, um den Spalt 75 zwischen sich auszubilden.

Die Figur 3 zeigt auch zwei Winkel α und β, die die Schrägstellung des jeweils schräg abgeschnittenen Wellenabschnittsendes 61a, 62a definieren. Die beiden Winkel α, β ergänzen sich zu 180°. Als Winkel, der die Schrägstellung definiert, wird dabei der kleinere Winkel α betrachtet. Im Folgenden werden zum besseren Verständnis der Funktion der Erfindung, die anhand der Figur 4 erläutert werden wird, die vorhandenen geometrischen Beziehungen erläutert. Dies erfolgt anhand der geometrischen Beziehungen, die sich in der Seitenansicht ergeben, die die Figur 3 darstellt. Dies erlaubt es, vereinfachend planimetrische Größen zu betrachten. Alternativ könnten die Ebenen betrachtet werden, in denen die Stirnflächen 610, 620 liegen.

Im Folgenden wird der zweite Wellenabschnitt 62 betrachtet. Entsprechende geometrische Beziehungen gelten für den ersten Wellenabschnitt 61. Gemäß der Figur 3 weist der zweite Wellenabschnitt 62 einen Außendurchmesser b auf. Die Stirnfläche 620 des schräg abgeschnittenen Endes 62a bildet in der Seitenansicht eine schräg verlaufende Linie c. Die aufgrund des schräg abgeschnittenen Endes bereitgestellte axiale Verlängerung wird als d bezeichnet. Im durch die Strecken b, c, und d gebildeten rechtwinkligen Dreieck stellt c die Hypotenuse dar. Es gilt, dass der Sinus des Winkels α gleich b/c ist und der Kosinus des Winkels α gleich d/c ist.

Die Funktionsweise der Erfindung wird nunmehr anhand der Figur 4 erläutert. Im Falle eines Wellenbruchs entwickeln die beiden Wellenabschnitte 61, 62 eine unterschiedliche Drehgeschwindigkeit. Dies hängt damit zusammen, dass die Drehgeschwindigkeit des zweiten Wellenabschnitt 62 gleich der Drehgeschwindigkeit der rotierenden Teile der Hochdruckturbine 50 (vergleiche Figur 2) ist. Diese nimmt nach einem Wellenbruch zu, da die Turbine nunmehr freilaufend ist. Die Drehgeschwindigkeit des ersten Wellenabschnitts 61 ist gleich der Drehgeschwindigkeit der rotierenden Teile des Hochdruckverdichters 30, dessen Rotation nach einem Wellenbruch langsam abnimmt.

Dementsprechend setzt nach einem Wellenbruch eine relative Drehbewegung zwischen den beiden Wellenabschnitte 61, 62 ein. Diese führt dazu, dass die beiden Stirnflächen 610, 620, die im nominalen Zustand durch den Spalt 75 beabstandet sind, nunmehr in Kontakt treten. Der Spalt 75 ist dabei ausreichend klein bemessen, damit dies erfolgen kann. Aufgrund der Schrägstellung der Enden 61a, 62a und aufgrund des Umstandes, dass die beiden Wellenabschnitte 61, 62 nur in axialer Richtung verschiebbar sind, rollen sich die Stirnflächen 610, 620 derart ab, dass die beiden Wellenabschnitte 61, 62 schlagartig voneinander weg bewegt werden, wobei der Wellenabschnitt 61 entgegen der axialen Richtung und der Wellenabschnitt 62 in axialer Richtung verschoben wird.

Die Figur 4 zeigt das Endstadium einer solchen Relativbewegung bzw. Axialverschiebung zwischen den beiden Wellenabschnitte 61, 62. Dieses Endstadium wird bereits nach einer halben relativen Umdrehung der beiden Wellenabschnitte 61, 62 erreicht. Für die Gesamtverschiebung d gilt:

$$d = c \cdot \cos(\alpha)$$

Jeder Wellenabschnitt ist um die axiale Strecke d/2 verschoben worden.

Um die Verschiebung der Wellenabschnitte 61, 62 zu führen, kann zusätzlich ein Führungszapfen 63 vorgesehen sein, der aus dem Wellenabschnitt 61 herausragt und in den Wellenabschnitt 62 hineinragt (oder umgekehrt). Der Führungszapfen 63 ist am Wellenabschnitt 61 befestigt. Der Führungszapfen 63 sichert eine exakte axiale Führung der beiden Wellenabschnitte 61, 62 bei ihrer axialen Verschiebung. Er erhöht die Stabilität des Systems und stellt insbesondere sicher, dass sich die Wellenabschnitte (61, 62) bei ihrer Interaktion nicht quer zur Längsachse aufbiegen.

Die axiale Verschiebung um den Betrag d/2 des Wellenabschnitts 62 führt dazu, dass die Rotorschaufeln 510, 520 der Hochdruckturbine in die zugehörigen Statoren 53 gedrückt werden oder dies mit besonderer Kraft erfolgt. Hierdurch wird der Beschleunigung der Turbine 50, die nach einem Bruch der Hauptwelle einsetzt, durch die damit verbundene Reibung entgegengewirkt. Des Weiteren führt die axiale Verschiebung um den Betrag d/2 des Wellenabschnitts 61 dazu, dass die Rotorschaufeln 310, 320 des Hochdruckverdichter in die zugehörigen Statoren 33 gedrückt werden. Es erfolgt eine beschleunigte Abbremsung des Verdichters 30, wobei der Druck im Verdichter nach einem Wellenbruch schneller abgebaut wird.

Beispielsweise beträgt der Abstand zwischen Rotorschaufeln 510 und Statorschaufeln 53 in der Hochdruckturbine 4 mm (vgl. Figur 2). Wenn der Betrag d der Axialverschiebung 4 mm übersteigt, wird somit bereits erreicht, dass nach einem Bruch der Hauptwelle 81 die Rotorschaufeln 510 der Turbine 50 in Kontakt mit den Statorschaufeln 53 treten (bzw. ein solches in Kontakt treten verstärkt wird) und eine Abbremsung der Rotation der Hochdruckturbine 50 erfolgt.

Statt in Kontakt mit Statoren 33, 53 können die Rotorschaufeln 310, 320, 510, 520 oder andere rotierende Teile des Verdichters 30 oder der Turbine 50 - abhängig von der strukturellen Ausgestaltung des Verdichters bzw. der Turbine - auch in Kontakt mit anderen statischen Bauteilen des Verdichters bzw. der Turbine treten, um Energie zu dissipieren. Auch kann eine Energiedissipation durch eine zusätzliche Reibung in den jeweiligen Axiallagern erreicht werden, die durch die Axialverschiebung bzw. die hierbei wirkenden Kräfte bereitgestellt wird.

Die teilweise geschnittene Ansicht der Figur 5 lässt gut erkennen, dass es sich bei den Wellenabschnitten 61, 62 um Hohlzylinder handelt (wobei nur der Wellenabschnitt 62 geschnitten dargestellt ist). Die Stirnflächen 610, 610 der Enden 61a, 62a der Wellenabschnitte 61, 62 sind ringförmig ausgebildet. Ihre radiale Erstreckung ist durch die Dicke des Hohlzylinders vorgegeben.

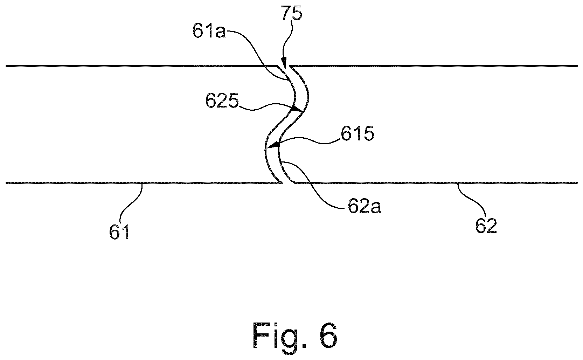

Die Figur 6 zeigt ein alternatives Ausführungsbeispiel, bei dem die Stirnseiten 615, 625 der aneinander angrenzenden und durch einen Spalt 75 voneinander getrennten Enden 61a, 62a der beiden Wellenabschnitte 61, 62 wellenförmig ausgebildet sind. Die Wellenform wird beispielsweise durch eine Sinusschwingung gebildet. Im dargestellten Ausführungsbeispiel realisieren die Stirnflächen 615, 625 jeweils zwei Schwingungen, wobei in der Seitenansicht der Figur 6 nur eine der Schwingungen zu sehen ist. Jede Schwingung umfasst einen Wellenberg und ein Wellental. In alternativen Ausführungsvarianten realisieren die Stirnflächen 615, 625 nur eine Schwingung oder mehr als 2 Schwingungen.

Die Stirnseiten 615, 625 bilden aufgrund ihrer jeweiligen Wellenform miteinander korrespondierende Strukturen aus. Dabei ist vorgesehen, dass die an den beiden Stirnseiten 615, 625 realisierten Wellenformen die gleiche Periode und die gleiche Amplitude aufweisen.

Im Betrieb der Hauptwelle sind die beiden Wellenabschnitte 61, 62 derart zueinander ausgerichtet, dass jeweils Wellenberg und Wellental an den Stirnseiten 615, 625 einander gegenüberliegen, wie in der Figur 6 dargestellt. Bei Bruch der Hauptwelle verdrehen sich die beiden Wellenabschnitte 61, 62 wie erläutert relativ zueinander. Dies führt dazu, dass nach relativer Verdrehung um eine halbe Periode (d.h. um den Betrag eines Wellenbergs) an den Stirnseiten 615, 625 Wellenberg an Wellenberg anliegt, was einhergeht mit einer axialen Verschiebung der beiden Wellenabschnitte 61, 62.

Die Gesamtverschiebung der beiden Wellenabschnitte 61, 62 hängt bei dieser Ausgestaltung von der Amplitude der Wellenform ab. Je größer die Amplitude ist, desto stärker ist die axiale Verschiebung. Das Verhältnis von Amplitude zu Periode wird dabei derart gewählt, dass eine Verdrehung der beiden Wellenabschnitte 61, 62 an ihren Stirnseiten 615, 625 relativ zueinander nicht gehemmt ist.

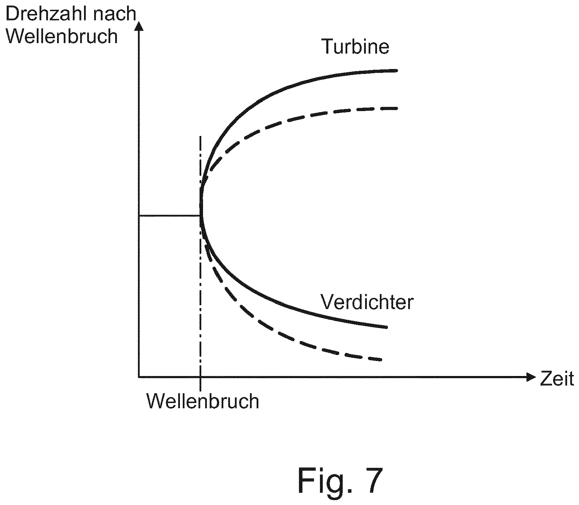

Die Figur 7 zeigt den Verlauf der Drehzahl von Turbine und Verdichter im Falle eines Wellenbruches, wobei der Verlauf in Abhängigkeit von der Zeit ab Eintritt des Wellenbruchs dargestellt ist. Die durchgezogene Linie zeigt den Verlauf bei einem Gasgenerator, der ohne eine erfindungsgemäße Zusatzwelle ausgebildet ist. Die gestrichelte Linie zeigt den Verlauf bei einem Gasgenerator mit erfindungsgemäßer Zusatzwelle.

Grundsätzlich gilt, dass die Drehzahl der Turbine nach einem Wellenbruch zunimmt und die Drehzahl des Verdichters bei einem Wellenbruch abnimmt. Durch die Erfindung und die durch diese bereitgestellte Abbremswirkung der Rotation von Turbine und Verdichter wird erreicht, dass die Beschleunigung der Turbine nach einem Wellenbruch reduziert und die Abbremsung des Verdichters beschleunigt wird.

Die vorliegende Erfindung beschränkt sich in ihrer Ausgestaltung nicht auf die vorstehend beschriebenen Ausführungsbeispiele, die lediglich beispielhaft zu verstehen sind. Beispielsweise wurde die Erfindung vorstehend anhand eines Turbofantriebwerks beschrieben. Die Erfindung kann jedoch in gleicher Weise an jeder anderen Gasturbine realisiert werden. Auch wird darauf hingewiesen, dass die konkrete Ausgestaltung der Enden der beiden Wellenabschnitte lediglich beispielhaft zu verstehen sind. So können die miteinander korrespondierenden Strukturen an den Enden der beiden Wellenabschnitte in anderer Weise als beschrieben ausgebildet sein, zum Beispiel in Form von anderen Erhebungen und Vertiefungen, die in korrespondierender Weise an den jeweiligen Enden ausgebildet sind.

Des Weiteren wird darauf hingewiesen, dass die Merkmale der einzelnen beschriebenen Ausführungsbeispiele der Erfindung in verschiedenen Kombinationen miteinander kombiniert werden können. Sofern Bereiche definiert sind, so umfassen diese sämtliche Werte innerhalb dieser Bereiche sowie sämtliche Teilbereiche, die in einen Bereich fallen.

**Patentansprüche**

1. Gasturbine, die aufweist:

   - eine Turbine (50),
   - einen der Turbine (50) vorgeschalteten Verdichter (30), und
   - eine in axialer Richtung verlaufende Hauptwelle (81), die die Turbine (50) mit dem Verdichter (30) verbindet, wobei die axiale Richtung dahingehend definiert ist, dass sie vom Verdichter (30) zur Turbine (50) gerichtet ist, sowie eine Zusatzwelle (6), die koaxial zur Hauptwelle (81) verläuft, **dadurch gekennzeichnet, dass**

   - die Zusatzwelle (6) einen ersten Wellenabschnitt (61) und einen zweiten Wellenabschnitt (62) aufweist, die durch einen Spalt (75) voneinander getrennt sind, wobei der erste Wellenabschnitt (61) mit dem Verdichter (30) und der zweite Wellenabschnitt (62) mit der Turbine (50) verbunden ist,
   - die beiden Wellenabschnitte (61, 62) an ihren einander zugewandten Enden (61a, 62a) miteinander korrespondierende Strukturen (610, 615, 620, 625) aufweisen,
   - der Spalt (75) zwischen den beiden Wellenabschnitten (61, 62) derart bemessen ist, dass bei Bruch der Hauptwelle (81) aufgrund einer dann einsetzenden unterschiedlichen Drehgeschwindigkeit der beiden Wellenabschnitte (61, 62) die miteinander korrespondierenden Strukturen (610, 615, 620, 625) der einander zugewandten Enden (61a, 62a) der beiden Wellenabschnitte (61, 62) in Interaktion treten und relativ zueinander verdrehen, und
- die miteinander korrespondierenden Strukturen derart ausgebildet sind, dass die beiden Wellenabschnitte (61, 62) bei einem solchen Verdrehen der beiden Wellenabschnitte (61, 62) voneinander weg bewegt werden.

2. Gasturbine nach Anspruch 1, **dadurch gekennzeichnet, dass** die beiden Wellenabschnitte (61, 62) an ihren einander zugewandten Enden (61a, 62a) jeweils schräg abgeschnitten und dabei im Betrieb der Hauptwelle derart ausgerichtet sind, dass die einander zugewandten Enden (61a, 62a) in parallelen Ebenen liegen.

3. Gasturbine nach Anspruch 1, **dadurch gekennzeichnet, dass** die beiden Wellenabschnitte (61, 62) an ihren einander zugewandten Enden (61a, 62a) jeweils wellenförmig ausgebildet sind.

4. Gasturbine nach einem der vorangehenden Ansprüche, **dadurch gekennzeichnet, dass** der erste Wellenabschnitt (61) dazu ausgebildet ist, bei Bruch der Hauptwelle (81) eine Kraft entgegen der axialen Richtung zu erfahren und diese Kraft auf den Verdichter (30) zu übertragen, mit dem er verbunden ist.

5. Gasturbine nach einem der vorangehenden Ansprüche, **dadurch gekennzeichnet, dass** der zweite Wellenabschnitt (62) dazu ausgebildet ist, bei Bruch der Hauptwelle (81) eine Kraft in axialer Richtung zu erfahren und diese Kraft auf die Turbine (50) zu übertragen, mit der er verbunden ist.

6. Gasturbine nach einem der vorangehenden Ansprüche, soweit rückbezogen auf Anspruch 2, **dadurch gekennzeichnet, dass** der Winkel ($\alpha$), der die Schrägstellung des jeweils schräg abgeschnittenen Wellenabschnittsendes (61a, 62a) gegenüber der axialen Richtung definiert, zwischen 10° und 80°, insbesondere zwischen 30° und 60° liegt.

7. Gasturbine nach einem der vorangehenden Ansprüche, soweit rückbezogen auf Anspruch 2, **dadurch gekennzeichnet, dass** die beiden Wellenabschnitte (61, 62) dazu ausgebildet sind, nach Bruch der Hauptwelle (81) um die Strecke $c \cdot \cos(\alpha)$ gegeneinander verschoben zu werden, wobei $\alpha$ der Winkel ist, der die Schrägstellung des jeweils schräg abgeschnittenen Wellenabschnittsendes (61a, 62a) gegenüber der axialen Richtung definiert, und c die Länge der Hypotenuse des abgeschnittenen Wellenabschnittsendes (61a, 62a) in Seitenansicht ist.

8. Gasturbine nach einem der vorangehenden Ansprüche, **dadurch gekennzeichnet, dass** der erste Wellenabschnitt (61) oder der zweite Wellenabschnitt (62) an seinem Ende einen Führungszapfen (63) ausbildet, der in den anderen Wellenabschnitt (62, 61) hineinragt.

9. Gasturbine nach einem der vorangehenden Ansprüche, **dadurch gekennzeichnet, dass** die beiden Wellenabschnitte (61, 62) als Hohlzylinder ausgebildet sind.

10. Gasturbine nach einem der vorangehenden Ansprüche, **dadurch gekennzeichnet, dass** die Hauptwelle (81) eine Hochdruckwelle ist, die eine Hochdruckturbine (50) mit einem Hochdruckverdichter (30) koppelt.

11. Verfahren zum Schutz einer Gasturbine bei Wellenbruch, wobei die Gasturbine eine Turbine (50), einen der Turbine (50) vorgeschalteten Verdichter (30), und eine in axialer Richtung verlaufende Hauptwelle (81), die die Turbine (50) mit dem Verdichter (30) verbindet, aufweist, wobei die axiale Richtung dahingehend definiert ist, dass sie vom Verdichter (30) zur Turbine (50) gerichtet ist,
**dadurch gekennzeichnet,**
**dass** bei Bruch der Hauptwelle (81) mittels einer Zusatzwelle (6), die koaxial zur Hauptwelle (81) verläuft, eine Kraft in axialer Richtung in die Turbine (50) und eine Kraft entgegen der axialen Richtung in den Verdichter (30) eingeleitet wird, wobei

- die Zusatzwelle (6) einen ersten, mit dem Verdichter (30) verbundenen Wellenabschnitt (61) und einen zweiten, mit der Turbine (50) verbundenen Wellenabschnitt (62) aufweist, die durch einen Spalt (75) voneinander getrennt sind, und die beiden Wellenabschnitte (61, 62) an ihren einander zugewandten Enden (61a, 62a) miteinander korrespondierende Strukturen (610, 615, 620, 625) aufweisen, und
- die miteinander korrespondierenden Strukturen (610, 615, 620, 625) der einander zugewandten Enden (61a, 62a) der beiden Wellenabschnitte (61, 62) bei Bruch der Hauptwelle (81) aufgrund einer dann einsetzenden unterschiedlichen Drehgeschwindigkeit der beiden Wellenabschnitte (61, 62) in Interaktion miteinander treten und die beiden Wellenabschnitte (61, 62) dabei voneinander weg bewegt werden.

12. Verfahren nach Anspruch 11, **dadurch gekennzeichnet, dass** bei Bruch der Hauptwelle (81) der zweite Wellenabschnitt (62) eine Kraft in axialer Richtung erfährt und diese Kraft auf die Turbine (50) überträgt.

**13.** Verfahren nach Anspruch 12, **dadurch gekennzeichnet, dass** die Turbine (50) aufgrund der durch den zweiten Wellenabschnitt (62) übertragenen Kraft in Statoren (53) oder andere nichtrotierende Strukturen gedrückt und hierdurch gebremst wird.

**14.** Verfahren nach einem der Ansprüche 11 bis 13, **dadurch gekennzeichnet, dass** bei Bruch der Hauptwelle (81) der erste Wellenabschnitt (61) eine Kraft entgegen der axialen Richtung erfährt und diese Kraft auf den Verdichter (30) überträgt.

**15.** Verfahren nach einem der Ansprüche 11 bis 14, **dadurch gekennzeichnet, dass** die beiden Wellenabschnitte (61, 62) an ihren einander zugewandten Enden (61a, 62a) jeweils schräg abgeschnitten sind und bei einer relativen Verdrehung um 180° in axialer Richtung voneinander weg bewegt werden.

**Claims**

**1.** Gas turbine, having:

> - a turbine (50),
> - a compressor (30) upstream of the turbine (50), and
> - a main shaft (81) running in the axial direction and connecting the turbine (50) to the compressor (30), the axial direction being defined to the effect that it is oriented from the compressor (30) to the turbine (50),
>
> plus
> an additional shaft (6) running coaxially to the main shaft (81),
> **characterized in that**
>
> - the additional shaft (6) has a first shaft section (61) and a second shaft section (62) separated from one another by a gap (75), wherein the first shaft section (61) is connected to the compressor (30) and the second shaft section (62) to the turbine (50),
> - the two shaft sections (61, 62) have at their facing ends (61a, 62a) structures (610, 615, 620, 625) corresponding to one another,
> - the gap (75) between the two shaft sections (61, 62) is dimensioned such that in the event of a fracture of the main shaft (81) the corresponding structures (610, 615, 620, 625) of the facing ends (61a, 62a) of the two shaft sections (61, 62) enter into interaction and rotate relative to each other due to differing rotational speeds of the two shaft sections (61, 62) then occurring, and
> - the structures corresponding to one another are designed such that the two shaft sections (61, 62) are moved away from each other during said rotation of the two shaft sections (61, 62).

**2.** Gas turbine in accordance with Claim 1, **characterized in that** the two shaft sections (61, 62) are each obliquely cut off at their facing ends (61a, 62a) and are aligned such during operation of the main shaft that the facing ends (61a, 62a) are in parallel planes.

**3.** Gas turbine in accordance with Claim 1, **characterized in that** the two shaft sections (61, 62) are each designed ondulated at their facing ends (61a, 62a).

**4.** Gas turbine in accordance with one of the preceding Claims, **characterized in that** the first shaft section (61) is designed to be subjected to a force against the axial direction in the event of a fracture of the main shaft (81) and to transmit said force to the compressor (30) to which it is connected.

**5.** Gas turbine in accordance with one of the preceding Claims, **characterized in that** the second shaft section (62) is designed to be subjected to a force in the axial direction in the event of a fracture of the main shaft (81) and to transmit said force to the turbine (50) to which it is connected.

**6.** Gas turbine in accordance with one of the preceding Claims, if related to Claim 2, **characterized in that** the angle ($\alpha$) defining the inclination of the obliquely cut-off shaft section end (61a, 62a) relative to the axial direction is between 10° and 80°, in particular between 30° and 60°.

**7.** Gas turbine in accordance with one of the preceding Claims, if related to Claim 2, **characterized in that** the two shaft sections (61, 62) are designed to be moved relative to one another by the distance $c \cdot \cos(\alpha)$ after a fracture of the main shaft (81), wherein $\alpha$ is the angle defining the inclination of the obliquely cut-off shaft section end (61a, 62a) relative to the axial direction, and c is the length of the hypotenuse of the cut-off shaft section end (61a, 62a) in a side view.

**8.** Gas turbine in accordance with one of the preceding Claims, **characterized in that** the first shaft section (61) or the second shaft section (62) forms at its end a guide pin (63) which projects into the other shaft section (62, 61).

**9.** Gas turbine in accordance with one of the preceding Claims, **characterized in that** the two shaft sections (61, 62) are designed as hollow cylinders.

**10.** Gas turbine in accordance with one of the preceding Claims, **characterized in that** the main shaft (81) is a high-pressure shaft that couples a high-pressure turbine (50) to a high-pressure compressor (30).

11. Method for protecting a gas turbine in the event of a shaft fracture, with the gas turbine having a turbine (50), a compressor (30) upstream of the turbine (50), and a main shaft (81) running in the axial direction and connecting the turbine (50) to the compressor (30), the axial direction being defined to the effect that it is oriented from the compressor (30) to the turbine (50),
**characterized in that**
by means of an additional shaft (6) that runs coaxially to the main shaft (81), in the event of a fracture of the main shaft (81), a force in the axial direction is introduced into the turbine (50) and a force against the axial direction is introduced into the compressor (30), wherein

- the additional shaft (6) has a first shaft section (61) that is connected to the compressor (30) and a second shaft section (62) that is connected to the turbine (50), with the two shaft sections being separated from one another by a gap (75), wherein the two shaft sections (61, 62) have at their facing ends (61a, 62a) structures (610, 615, 620, 625) corresponding to one another, and wherein
- the corresponding structures (610, 615, 620, 625) of the facing ends (61a, 62a) of the two shaft sections (61, 62) enter into interaction, in the event of a fracture of the main shaft (81), due to differing rotational speeds of the two shaft sections (61, 62) then occurring, and the two shaft sections (61, 62) are moved away from each other during said rotation.

12. Method in accordance with Claim 11, **characterized in that** in the event of a fracture of the main shaft (81) the second shaft section (62) is subjected to a force in the axial direction and transmits said force to the turbine (50).

13. Method in accordance with Claim 12, **characterized in that** the turbine (50) is pressed into stators (53) or other non-rotating structures due to the force transmitted by the second shaft section (62) and is thereby decelerated.

14. Method in accordance with one of the Claims 11 to 13, **characterized in that** in the event of a fracture of the main shaft (81) the first shaft section (61) is subjected to a force against the axial direction and transmits said force to the compressor (30).

15. Method in accordance with one of the Claims 11 to 14, **characterized in that** the two shaft sections (61, 62) are each obliquely cut off at their facing ends (61a, 62a) and are moved away from each other in the axial direction during a relative rotation by 180°.

**Revendications**

1. Turbine à gaz qui présente:

- une turbine (50),
- un compresseur (30) monté en amont de la turbine (50), et
- un arbre principal (81) s'étendant dans le sens axial qui relie la turbine (50) au compresseur (30), sachant que le sens axial est défini en ce qu'il est orienté du compresseur (30) vers la turbine (50),

ainsi
qu'un arbre supplémentaire (6) qui s'étend coaxialement par rapport à l'arbre principal (81),
**caractérisée en ce que**

- l'arbre supplémentaire (6) présente une première section d'arbre (61) et une seconde section d'arbre (62) séparées l'une de l'autre par une fente (75), sachant que la première section d'arbre (61) est reliée au compresseur (30) et que la seconde section d'arbre (62) est reliée à la turbine (50),
- les deux sections d'arbre (61, 62) présentent sur leurs extrémités tournées l'une vers l'autre (61a, 62a) des structures correspondant entre elles (610, 615, 620, 625),
- la fente (75) entre les deux sections d'arbre (61, 62) est dimensionnée de telle sorte qu'en cas de rupture de l'arbre principal (81), les structures correspondant entre elles (610, 615, 620, 625) des extrémités tournées l'une vers l'autre (61a, 62a) des deux sections d'arbre (61, 62) interagissent et se tordent relativement l'une par rapport à l'autre en raison d'une vitesse de rotation différente se développant ensuite pour les deux sections d'arbre (61, 62), et que
- les structures correspondant entre elles sont conçues de telle sorte que les deux sections d'arbre (61, 62) s'éloignent l'une de l'autre lors d'une telle torsion des deux sections d'arbre (61, 62).

2. Turbine à gaz selon la revendication n° 1, **caractérisée en ce que** les deux sections d'arbre (61, 62) sont coupées chacune de biais sur leurs extrémités tournées l'une vers l'autre (61a, 62a) et sont orientées de telle sorte pendant le fonctionnement de l'arbre principal que les extrémités tournées l'une vers l'autre (61a, 62a) se trouvent sur des plans parallèles.

3. Turbine à gaz selon la revendication n° 1, **caracté-**

**risée en ce que** les deux sections d'arbre (61, 62) sont configurées ondulées chacune sur leurs extrémités tournées l'une vers l'autre (61a, 62a).

4. Turbine à gaz selon une des revendications précédentes, **caractérisée en ce que** la première section d'arbre (61) est conçue pour subir une force en sens opposé au sens axial, en cas de rupture de l'arbre principal (81), et pour transmettre cette force au compresseur (30) auquel elle est reliée.

5. Turbine à gaz selon une des revendications précédentes, **caractérisée en ce que** la seconde section d'arbre (62) est conçue pour subir une force en sens axial, en cas de rupture de l'arbre principal (81), et pour transmettre cette force à la turbine (50) à laquelle elle est reliée.

6. Turbine à gaz selon une des revendications précédentes, pour autant que rattachée à la revendication n° 2, **caractérisée en ce que** l'angle (a) qui définit l'inclinaison de l'extrémité de section d'arbre respective coupée de biais (61a, 62a) par rapport au sens axial est compris entre 10° et 80°, notamment entre 30° et 60°.

7. Turbine à gaz selon une des revendications précédentes, pour autant que rattachée à la revendication n° 2, **caractérisée en ce que** les deux sections d'arbre (61, 62) sont conçues de manière à être décalées l'une par rapport à l'autre du trajet c·cos($\alpha$), après une rupture de l'arbre principal (81), sachant que $\alpha$ est l'angle qui définit l'inclinaison de l'extrémité de la section d'arbre respective coupée de biais (61a, 62a) par rapport au sens axial et c la longueur de l'hypoténuse de l'extrémité de la section d'arbre coupée (61a, 62a) en vue de côté.

8. Turbine à gaz selon une des revendications précédentes, **caractérisée en ce que** la première section d'arbre (61) ou la seconde section d'arbre (62) constitue à son extrémité un goujon de guidage (63) qui pénètre dans l'autre section d'arbre (62, 61).

9. Turbine à gaz selon une des revendications précédentes, **caractérisée en ce que** les deux sections d'arbre (61, 62) sont conçues en tant que cylindres creux.

10. Turbine à gaz selon une des revendications précédentes, **caractérisée en ce que** l'arbre principal (81) est un arbre haute pression, qui relie une turbine haute pression (50) à un compresseur haute pression (30).

11. Procédé destiné à protéger une turbine à gaz en ces de rupture d'arbre, sachant que la turbine à gaz présente une turbine (50), un compresseur (30) monté en amont de la turbine (50), et un arbre principal (81) s'étendant dans le sens axial qui relie la turbine (50) au compresseur (30), sachant que le sens axial est défini en ce qu'il est orienté du compresseur (30) vers la turbine (50), **caractérisé en ce que** moyennant un arbre supplémentaire (6) qui s'étend coaxialement par rapport à l'arbre principal (81), en cas de rupture de l'arbre principal (81), une force est transmise à la turbine (50) en sens axial, et une force est transmise au compresseur (30) en sens opposé au sens axial, sachant que

- l'arbre supplémentaire (6) présente une première section d'arbre (61) reliée au compresseur (30) et une seconde section d'arbre (62) reliée à la turbine (50) séparées l'une de l'autre par une fente (75), et que les deux sections d'arbre (61, 62) présentent sur leurs extrémités tournées l'une vers l'autre (61a, 62a) des structures correspondant entre elles (610, 615, 620, 625), et que
- les structures correspondant entre elles (610, 615, 620, 625) des extrémités tournées l'une vers l'autre (61a, 62a) des deux sections d'arbre (61, 62) interagissent en cas de rupture de l'arbre principal (81) en raison d'une vitesse de rotation différente se développant ensuite pour les deux sections d'arbre (61, 62) et que les deux sections d'arbre (61, 62) s'éloignent l'une de l'autre durant ladite rotation.

12. Procédé selon la revendication n° 11, **caractérisé en ce qu'en** cas de rupture de l'arbre principal (81) la seconde section d'arbre (62) subit une force en sens axial et transmet cette force à la turbine (50).

13. Procédé selon la revendication n° 12, **caractérisé en ce qu'en** raison de la force transmise par la seconde section d'arbre (62), la turbine (50) est poussée dans des stators (53) ou autres structures non rotatives et est ainsi décélérée.

14. Procédé selon une des revendications n° 11 à n° 13, **caractérisé en ce qu'en** cas de rupture de l'arbre principal (81) la première section d'arbre (61) subit une force en sens opposé au sens axial et transmet cette force au compresseur (30).

15. Procédé selon une des revendications n° 11 à n° 14, **caractérisé en ce que** les deux sections d'arbre (61, 62) sont coupées chacune de biais sur leurs extrémités tournées l'une vers l'autre (61a, 62a) et sont éloignées l'une de l'autre dans le sens axial lors d'une torsion relative de 180°.

EP 3 269 943 B1

Fig. 1

Fig. 2

Fig. 3

Fig. 4

Fig. 5

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 2111639 A
- GB 2377731 A